# DEMANDE DE BREVET EUROPEEN

(11) **EP 3 056 361 A1**
(43) Date de publication de la demande: **17.08.2016**
(21) Numéro de dépôt: 16155050.4
(22) Date de dépôt: 10.02.2016
(51) Int. Cl.: B60C 23/06, B61K 9/12

(54) **SYSTÈME ET MÉTHODE DE DÉTECTION DE PNEUMATIQUES DÉGONFLÉS SUR UN TRAIN**

(30) Priorité: 11.02.2015 FR 1551125
(71) Demandeur: CLEARSY, 13857 Aix-en-Provence (FR)
(72) Inventeur: SAUVAGE, Patrick, 83470 SAINT MAXIMIN LA SAINTE BAUME (FR)
(74) Mandataire: Lavoix

(57) **Abrégé**

Ce système (1) de détection de pneumatiques (40) dégonflés sur un train équipé de roues de roulement (4), comprenant chacune un pneumatique (40) adapté pour rouler sur un rail plat (6). Ce système comprend au moins un capteur (12) de masse métallique adapté pour détecter le passage d'un élément métallique (80) lié à l'une des roues de roulement (4) du train à une distance (D) du capteur (12), prise perpendiculairement à un plan (P) passant par des axes de rotation (X4) des roues de roulement (4), inférieure à une valeur seuil (VS), et des moyens de traitement adaptés pour déclencher un signal d'avertissement de dégonflement du pneumatique (40) d'au moins une roue de roulement (4) du train si au moins un élément métallique (80) lié à l'une des roues de roulement (4) est détecté par le capteur (12).

## Description

L'invention concerne un système de détection de pneumatiques dégonflés sur un train. L'invention concerne également une méthode de détection de pneumatiques dégonflés sur un train.

Les trains utilisés sur certaines lignes de métro sont équipés de roues de roulement munies de pneumatiques roulants sur des rails plats. Pour des raisons de sécurité, le gonflage des pneumatiques doit être régulièrement contrôlé, pour éviter les échauffements des pneus dégonflés et des éventuels incendies ou accidents.

GB-A-2 311 886 et JP-A-2003/344205 décrivent des systèmes de détection de dégonflage de pneumatiques sur des véhicules automobiles qui ne sont pas applicables aux trains. DE-A-198 27 982 décrit un système de détection de fissures dans une roue métallique d'un véhicule ferroviaire. WO-A-01/07308 et EP-A-0 888 949 décrivent des systèmes de détection de défauts de circularité sur des roues métalliques de véhicules ferroviaires.

Il n'existe pas de système permettant de contrôler de façon fiable et pratique le gonflage des pneumatiques. Actuellement, des contrôles sont effectués par du personnel d'entretien sur chaque pneumatique, ce qui est long et coûteux. Des détections sont également effectuées en comparant la hauteur des trains dont les pneumatiques sont gonflés et la hauteur des trains dont les pneumatiques sont dégonflés.

C'est à ces inconvénients qu'entend remédier l'invention en proposant un nouveau système de détection de pneumatiques dégonflés sur un train, permettant, de façon simple et automatique, de détecter et de signaler un pneu dégonflé sur un train et de déclencher une procédure de vérification.

A cet effet l'invention concerne un système de détection de pneumatiques dégonflés sur un train équipé de roues de roulement comprenant chacune un pneumatique adapté pour rouler sur un rail plat. Ce système comprend au moins un capteur de masse métallique adapté pour détecter le passage d'un élément métallique lié à l'une des roues de roulement du train à une distance du capteur, prise perpendiculairement à un plan passant par des axes de rotation des roues de roulement, inférieure à une valeur seuil, et des moyens de traitement adaptés pour déclencher un signal d'avertissement de dégonflement du pneumatique d'au moins une roue de roulement du train si au moins un élément métallique lié à l'une des roues de roulement est détecté par le capteur.

Grâce à l'invention, lors du passage d'un train, la présence d'un ou plusieurs pneumatiques dégonflés est automatiquement détectée par un capteur de masse métallique et un signal est émis. Cela permet de cibler les trains dont le gonflage des pneumatiques doit être vérifié, une meilleure sécurité et un travail de vérification moins fastidieux pour le personnel d'entretien.

Selon des aspects avantageux mais non obligatoires de l'invention, un tel système peut incorporer une ou plusieurs des caractéristiques suivantes, prises dans toute combinaison techniquement admissible :
- Le capteur de masse métallique est monté sur un côté d'un rail de guidage aligné avec des roues métalliques de secours du train, qui sont liées aux roues de roulement, de manière à détecter le passage d'un mentonnet d'une des roues de secours.
- Le capteur est monté sous le rail plat de manière à détecter le passage d'une bande de roulement métallique de l'une des roues de roulement interposée entre le pneumatique et une jante de cette roue.
- Les capteurs de masse métallique détectent les bandes de roulement à travers des pièces de protection montées dans les rails plats.
- Le système de détection comprend au moins un second capteur de masse métallique dont la valeur seuil est adaptée au passage d'un second type de roues de roulement.

L'invention concerne également une méthode de détection de pneumatiques dégonflés sur un train, un tel train étant équipé d'essieux incluant des roues de roulement munies de pneumatiques adaptés pour rouler sur un rail plat. Cette méthode comprend les étapes suivantes :
- a) surveiller, avec un capteur de masse métallique, le passage d'un élément métallique lié à l'une des roues de roulement d'un essieu à une distance du capteur, prise perpendiculairement à un plan passant par des axes de rotation des roues de roulement, inférieure à une valeur seuil ;
- b) si la surveillance de l'étape a) détecte le passage d'un élément métallique à une distance du capteur inférieure à la valeur seuil, déclencher un signal d'avertissement de dégonflement du pneumatique d'au moins une des roues de roulement du train.

Selon des aspects avantageux mais non obligatoires de l'invention, une telle méthode peut incorporer une ou plusieurs des caractéristiques suivantes, prises dans toute combinaison techniquement admissible :
- A l'étape a), le passage du mentonnet d'une roue métallique de secours du train est surveillé.
- A l'étape a), le passage d'une bande de roulement métallique de l'une des roues de roulement, interposée entre le pneumatique et une jante des roues, est surveillé.
- A l'étape a), pour chacune des roues de roulement portées par l'un des essieux du train, le passage d'un élément métallique lié cinématiquement à ces roues est surveillé.
- La méthode comprend également une étape consistant à détecter, avec un second capteur de masse métallique, le passage de l'ensemble des roues de roulement du train passant au-dessus du capteur.

L'invention sera mieux comprise et d'autres avantages de celle-ci apparaîtront plus clairement à la lumière de la description qui va suivre, d'un système et d'une méthode de détection de pneumatiques dégonflés sur un train, faite à titre d'exemple non limitatif et en référence aux dessins annexés dans lesquels :
- la figure 1 est une vue en coupe transversale d'un système de détection conforme à un premier mode de réalisation de l'invention ;
- la figure 2 est une vue schématique globale du système de détection de la figure 1 ;
- la figure 3 est une vue similaire à la figure 1, représentant une variante du système de détection de la figure 1 ;
- la figure 4 est une vue similaire aux figures 1 et 3, d'un système de détection conforme à un second mode de réalisation de l'invention.

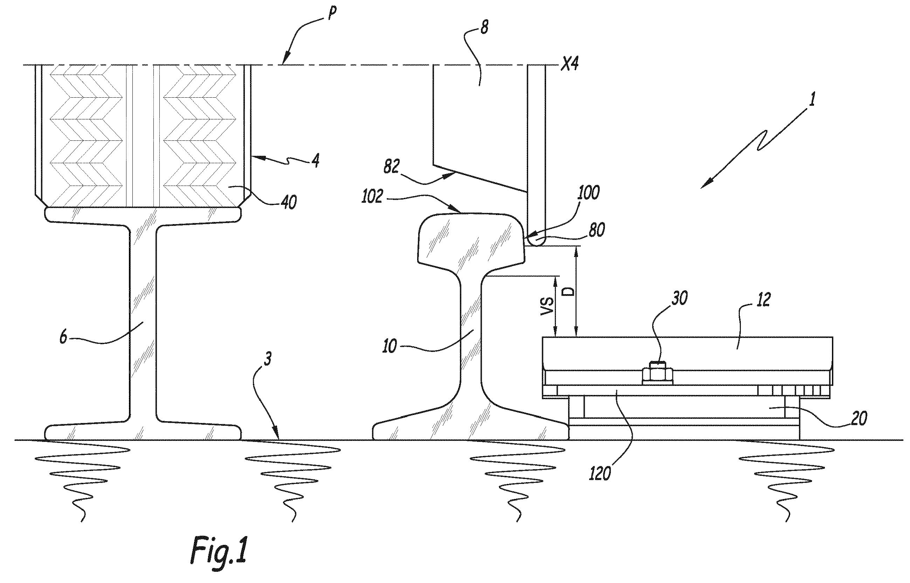

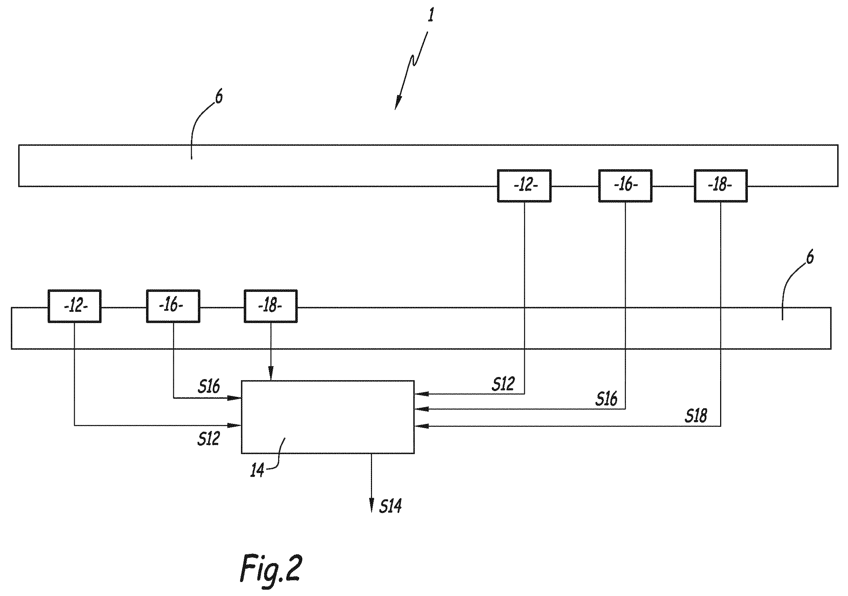

Le système 1 représenté sur les figures 1 et 2 est adapté pour détecter des pneumatiques dégonflés sur un train équipé d'essieux portant, à chacune de leurs extrémités, des roues de roulement 4 comprenant chacune un pneumatique 40 adapté pour rouler sur un rail plat 6 sur chaque côté longitudinal du train. Les roues 4 sont centrées sur des axes de rotation X4. La figure 1 représente un seul des côtés d'un train.

Le train comporte également des roues de secours dont une seule est représentée à la figure 1 avec la référence 8. Les roues de secours 8 sont solidaires en rotation des roues de roulement 4 selon les axes X4. Chaque essieu comprend deux roues de secours 8, chacune étant localisée sur un côté du train et décalée vers l'intérieur du train par rapport aux roues 4.

Les roues de secours 8 sont métalliques et sont généralement appelées « roues fer ». Elles comportent un mentonnet 80 s'étendant radialement par rapport à l'axe X4, et adapté pour venir en contact avec un rail de guidage 10 parallèle au rail 6. Le guidage du train est assuré par le contact entre le mentonnet 80 et un bord latéral 100 du rail 10.

En configuration normale du train, c'est-à-dire quand les pneumatiques 40 sont gonflés à leur pression de gonflage optimale, les roues de secours 8 sont éloignées verticalement d'une surface supérieure 102 des rails 10 de manière qu'une surface radiale 82 de la roue de secours 8, à partir de laquelle les mentonnets 80 s'étendent en saillie vers le bas, n'est pas en contact avec la surface supérieure 102. En cas de dégonflage du pneumatique 40, le train s'abaisse en direction des rails 10, la surface radiale 82 se rapprochant de la surface supérieure 102. Les surfaces 82 et 102 peuvent éventuellement entrer en contact lorsque le train effectue un virage. Les roues de secours 8 ont une fonction de sécurité, en permettant le roulage du train sur les rails de guidage 10 en cas d'éclatement d'un ou plusieurs pneumatiques 40.

Pour détecter le dégonflage des pneumatiques 40, des capteurs de masse métallique, dont un seul est représenté à la figure 1 avec la référence 12, sont installés de manière fixe sur le côté du rail de guidage 10. Un tel capteur 12 permet de détecter un élément métallique dans une certaine plage de détection. Le détecteur comprend un oscillateur générant un champ magnétique oscillant à une fréquence définie. Le passage d'un mentonnet métallique modifie le champ magnétique détecté par l'oscillateur et entraîne la suppression de la fréquence de l'oscillateur. Cette variation est détectée et permet de signaler le passage d'un élément métallique.

Le capteur 12 est placé de manière à surveiller la distance D entre le mentonnet 80 et le capteur 12, perpendiculairement à un plan P passant par les axes de rotation X4. En pratique, le plan P est généralement horizontal, et peut être incliné dans certains virages que le train effectue. En général, la distance D est donc verticale. Le capteur 12 surveille le passage d'un élément métallique lié à la roue 4, c'est-à-dire le mentonnet 80, qui est solidaire en rotation de la roue 4, à une valeur seuil VS de la distance D. Par « lié à la roue 4 », on entend que le mentonnet 80, ou plus généralement l'élément métallique détecté par le capteur 12, est solidaire de la roue 4 dans le cadre du mouvement général du train. La distance D entre le mentonnet 80 et le capteur 12 est représentative de la largeur, radialement par rapport à l'axe X4, des pneumatiques 40, et cette largeur radiale diminue lorsque la pression de gonflage des pneumatiques 40 diminue.

Si le mentonnet 80, à la suite d'un dégonflage du pneumatique 40, passe à l'aplomb du capteur 12 à une distance D inférieure à la valeur seuil VS, le capteur 12 détecte le mentonnet 80. Le capteur 12 émet donc un signal S12, comme cela est représenté à la figure 2, vers des moyens de traitement 14, qui centralisent les signaux S12 émis par les capteurs 12 de chaque côté du train. Les moyens de traitement 14, qui peuvent comprendre une armoire de comptage d'essieux, sont adaptés pour déclencher un signal d'avertissement de dégonflement du pneumatique 40 d'au moins une roue 4 si au moins un élément métallique lié à une des roues 4 du train est détecté par l'un des capteurs 12.

Le signal d'avertissement permet d'envoyer un message d'urgence au conducteur du train ou de déclencher une procédure de vérification pouvant impliquer le transfert du train dans un centre de maintenance.

De façon optionnelle, en fonction du type de roue utilisé, la valeur seuil VS peut être différente. Le système 1 comprend donc au moins une seconde série de capteurs 16 similaires aux capteurs 12, représentés à la figure 2, permettant de détecter le dégonflage de pneumatiques 40 pour un second type de roues. Ces capteurs 16 émettent des signaux S16 transmis aux moyens de traitement 14.

De façon optionnelle, le système 1 comprend également des capteurs 18 de masse métallique permettant de détecter le passage de chacune des roues du train et permettant la détection de la position des trains et leur sens de circulation. De tels capteurs 18 fonctionnent indépendamment des capteurs 12 et 16 et ont un seuil de détection plus haut. Les capteurs 18 peuvent être des capteurs de comptage des roues de roulement 4. Les capteurs 18 peuvent être implantés sur chaque côté du train ou seulement sur l'un des deux côtés. Les capteurs 18 émettent des signaux S18 qui sont également transmis aux moyens de traitement 14.

Comme cela est représenté à la figure 1, les capteurs 12 peuvent être vissés dans des pistes métalliques 20 fixées dans une surface 3 sur laquelle les rails 6 et 10 sont fixés par des moyens non représentés. Les capteurs 12 comprennent à cet effet un boîtier muni de pattes de fixation 120, dans lesquelles des boulons 30 sont insérés.

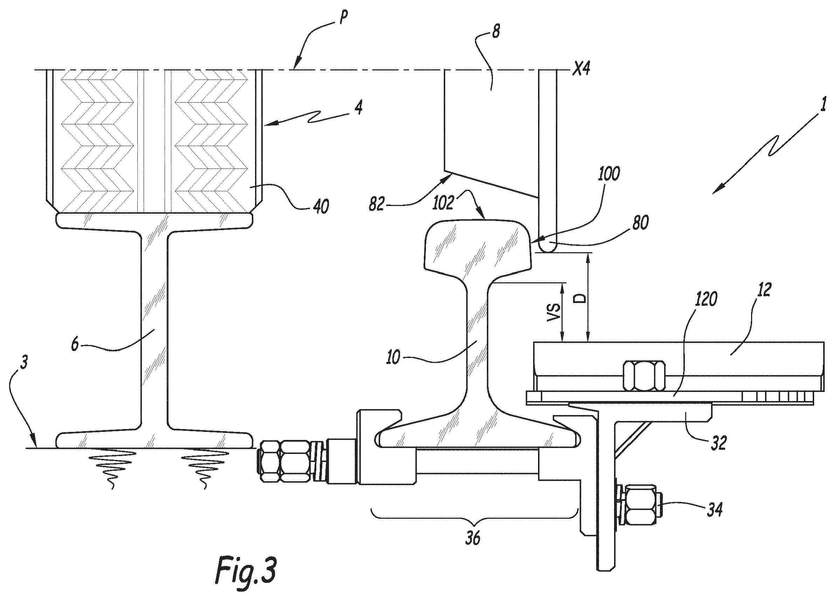

Selon une variante de l'invention représentée à la figure 3, les capteurs 12 sont fixés dans des supports 32 en équerre dont une partie horizontale supporte le capteur 12, et dont une partie verticale est fixée par des boulons 34 à une partie verticale d'un système de serrage 36 dans lequel sont fixés les rails de guidage 10.

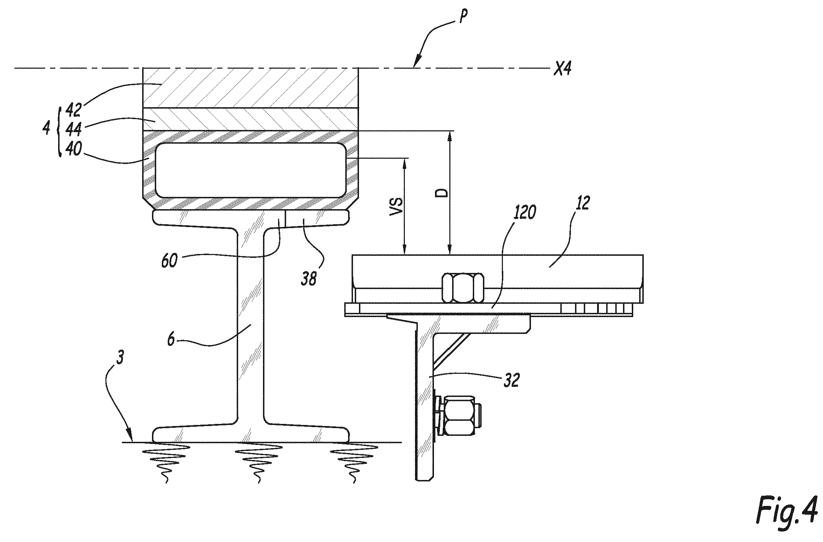

Un second mode de réalisation de l'invention est représenté à la figure 4. Dans ce mode de réalisation, les éléments communs au premier mode de réalisation portent les mêmes références et fonctionnent de la même manière. Seules les différences par rapport au premier mode de réalisation sont détaillées ci-après.

Le mode de réalisation de la figure 4 s'applique plus spécifiquement aux roues 4 portant une jante 42 entourée d'une bande métallique de roulement de secours 44, permettant le roulage de la roue 4 sur le rail 6 en cas de défaillance du pneumatique 40. La roue 4 est représentée en coupe à la figure 4. Dans ce cas, l'élément métallique lié aux roues 4 qui est détecté par les capteurs 12 n'est pas une roue de secours 8 mais la bande de roulement de secours 44.

De la même façon que dans le premier mode de réalisation, le capteur 12 détecte le passage de la bande de roulement de secours 44 à une distance D inférieure à la valeur seuil VS et envoie un signal S12 indiquant que le pneumatique 40 de la roue correspondante 4 est dégonflé.

Dans ce cas, le capteur 12 est placé directement sous une branche latérale supérieure 60 du rail 6, au moyen d'un support similaire au support 32 décrit dans le premier mode de réalisation.

Au-dessus de chaque capteur 12, le rail 6 présente des découpes pour permettre la détection du passage des bandes de roulement de secours 44 à travers le rail 6. Afin d'éviter que le passage des roues 4 sur les découpes ne détériore le capteur 12, des pièces de protection 38 en résine polymère, telle que de l'époxy, sont insérées dans les découpes des rails 6 situés au-dessus des capteurs 12. Les capteurs 12 détectent le passage des bandes de roulement 44 à travers les pièces de protection 38.

Selon un mode de réalisation non représenté, les roues de secours 8 peuvent être montées sur des axes de rotation différents des axes de rotation X4 des roues de roulement 4. Les roues de secours 8 peuvent notamment être des roues folles, c'est-à-dire qui ne sont pas entrainées mécaniquement, sauf lorsqu'elles entrent en contact avec les rails de guidage 10.

Selon un autre mode de réalisation non représenté, le train peut comprendre des essieux munis d'une seule roue de roulement 4 adaptée pour rouler sur un monorail, et d'au moins une roue de secours 8. Dans un tel cas, le système de détection 1 peut comprendre un unique capteur de masse métallique 12.

## Revendications

1. Système (1) de détection de pneumatiques (40) dégonflés sur un train équipé de roues de roulement (4) comprenant chacune un pneumatique (40) adapté pour rouler sur un rail plat (6), **caractérisé en ce qu'**il comprend au moins un capteur (12) de masse métallique adapté pour détecter le passage d'un élément métallique (80; 44) lié à l'une des roues de roulement (4) du train à une distance (D) du capteur (12), prise perpendiculairement à un plan (P) passant par des axes de rotation (X4) des roues de roulement (4), inférieure à une valeur seuil (VS), et des moyens de traitement (14) adaptés pour déclencher un signal (S14) d'avertissement de dégonflement du pneumatique (40) d'au moins une roue de roulement (4) du train si au moins un élément métallique (80; 44) lié à l'une des roues de roulement (4) est détecté par le capteur (12).

2. Système de détection selon la revendication 1, **caractérisé en ce que** le capteur (12) de masse métallique est monté sur un côté d'un rail de guidage (10) aligné avec des roues métalliques de secours (8) du train, qui sont liées aux roues (4) de roulement (40), de manière à détecter le passage d'un mentonnet (80) d'une des roues de secours (8).

3. Système de détection selon la revendication 1, **caractérisé en ce que** le capteur (12) est monté sous le rail plat (6) de manière à détecter le passage d'une bande de roulement métallique (44) de l'une des roues de roulement (4) interposée entre le pneumatique (40) et une jante de cette roue (4).

4. Système de détection selon la revendication 3, **caractérisé en ce que** les capteurs (12) de masse métallique détectent les bandes de roulement (44) à travers des pièces de protection (38) montées dans les rails plats (6).

5. Système de détection selon l'une des revendications précédentes, **caractérisé en ce qu'**il comprend un second capteur de masse métallique (16) dont la valeur seuil est adaptée au passage d'un second type de roues de roulement (4).

6. Méthode de détection de pneumatiques dégonflés sur un train, un tel train étant équipé d'essieux incluant des roues de roulement (4) munies de pneumatiques (40) adaptés pour rouler sur un rail plat (6), **caractérisée en ce qu'**elle comprend les étapes suivantes :
- a) surveiller, avec un capteur (12) de masse métallique, le passage d'un élément métallique (80 ; 44) lié à l'une des roues de roulement (4) d'un essieu à une distance (D) du capteur (12), prise perpendiculairement à un plan (P) passant par des axes de rotation (X4) des roues de roulement (4), inférieure à une valeur seuil (VS) ;
- b) si la surveillance de l'étape a) détecte le passage d'un élément métallique (80 ; 44) à une distance (D) du capteur (12) inférieure à la valeur seuil (VS), déclencher un signal d'avertissement (S14) de dégonflement du pneumatique (40) d'au moins une des roues de roulement (4) du train.

7. Méthode de détection selon la revendication 6, **caractérisée en ce qu'**à l'étape a), le passage du mentonnet (80) d'une roue (8) métallique de secours du train est surveillé.

8. Méthode de détection selon la revendication 6, **caractérisée en ce qu'**à l'étape a), le passage d'une bande de roulement métallique (44) de l'une des roues de roulement (4), interposée entre le pneumatique (40) et une jante (42) des roues (4), est surveillé.

9. Méthode de détection selon l'une des revendications 6 à 8, caractérisée en qu'à l'étape a), pour chacune des roues de roulement (4) portées par l'un des essieux du train, le passage d'un élément métallique (80 ; 44) lié cinématiquement à ces roues (4) est surveillé.

10. Méthode de détection selon l'une des revendications 6 à 9, **caractérisée en ce qu'**elle comprend également une étape consistant à détecter, avec un second capteur (18) de masse métallique, le passage de l'ensemble des roues de roulement (4) du train passant au-dessus du capteur (12).
